# EUROPEAN PATENT APPLICATION

(11) **EP 4 450 782 A1**
(43) Date of publication of application: **23.10.2024**
(21) Application number: 24171462.5
(22) Date of filing: 19.04.2024
(51) Int. Cl.: F01D 25/24, F16B 5/02, F16B 39/24, F16L 23/00

(54) **CLAMPING ASSEMBLY FOR A GAS TURBINE ENGINE AND METHOD OF USE**

(30) Priority: 20.04.2023 US 202318304079
(71) Applicant: PRATT & WHITNEY CANADA CORP., Longueuil, Québec J4G 1A1 (CA)
(72) Inventor: ISKRA, Oleg, (01BE5) Longueuil, J4G 1A1 (CA); ABDELRAHMAN, Ahmed, (01BE5) Longueuil, J4G 1A1 (CA); URAC, Tibor, (01BE5) Longueuil, J4G 1A1 (CA)
(74) Representative: Dehns

(57) **Abstract**

The assembly (30) has a first part (32) having a first coefficient of thermal expansion; a second part (34); an adapter (38); and a fastener (36) having a second coefficient of thermal expansion, a first end (44), a second end engaged with the second part, and an elongated body (46) extending along an axis between the first end and the second end, the fastener axially clamping the first part between the first end and the second part, the first part having an abutment (40) at an axial location between the first end (44) of the fastener and the second part (34), wherein the adapter (38) has a tubular body disposed around the elongated body of the fastener, the adapter (38) having a third coefficient of thermal expansion, the adapter axially clamped by the fastener between the abutment (40) and the first end (44) of the fastener, the second coefficient of thermal expansion being equivalent to the third coefficient of thermal expansion.

## Description

### TECHNICAL FIELD

The application relates generally to gas turbine engines and, more particularly, to fastened assemblies thereof.

### BACKGROUND

Fasteners such as bolts, screws and the like can be used in assemblies to hold different parts clamped against one another. While existing techniques were satisfactory to a certain degree, there remained room for improvement. In particular, in some assemblies, differences in thermal growth between one or more part and one or more fastener could lead to higher stress or removal of fasteners pre-load in some conditions of use.

### SUMMARY

According to an aspect of the present invention, there is provided an assembly in a hot section of an engine, the assembly comprising: a first part having a first coefficient of thermal expansion; a second part; a fastener having a second coefficient of thermal expansion, a first end, a second end engaged with the second part, and an elongated body extending along an axis between the first end and the second end, the fastener axially clamping the first part between the first end and the second part, the first part having an abutment at an axial location between the first end of the fastener and the second part; and an adapter having a tubular body disposed around the elongated body of the fastener, the adapter having a third coefficient of thermal expansion, the adapter axially clamped by the fastener between the abutment and the first end of the fastener, a difference between the third coefficient of thermal expansion and the second coefficient of thermal expansion being smaller than a difference between the first coefficient of thermal expansion and the second coefficient of thermal expansion. The abutment may be provided in the form of an annular shoulder

In an embodiment of the above, the fastener extends across a portion of the first part, through a bore formed across the portion of the first part.

In another embodiment according to any of the previous embodiments, an end of the adapter opposite the abutment protrudes from the bore and forms a clearance between the first end of the fastener and the portion of the first part.

In another embodiment according to any of the previous embodiments, the abutment is provided in the form of an annular shoulder formed at an intermediary location along a length of the bore extending along the axis.

In another embodiment according to any of the previous embodiments, the annular shoulder extends obliquely relative the axis, and wherein an end of the adapter engaging the annular shoulder extends matingly obliquely relative the length of the bore.

In another embodiment according to any of the previous embodiments, the third coefficient of thermal expansion is the same as the second coefficient of thermal expansion.

In another embodiment according to any of the previous embodiments, the adapter has an adapter length extending between the first end of the fastener and the abutment, along the axis, and the first part has a clamped length extending between the abutment and the second part along the axis, the adapter length being at least 2 times greater than the clamped length of the first part.

In another embodiment according to any of the previous embodiments, the fastener has a head at the first end, the head engaged with an end of the adapter opposite the abutment relative the axis.

In another embodiment according to any of the previous embodiments, the fastener has a threaded portion at the second end, the threaded portion being threadingly engaged with a mating female thread formed in the second part.

In another embodiment according to any of the previous embodiments, the fastener has a nut secured at the second end, the nut being engaged with a surface of the second part.

According to another aspect of the present invention, there is provided a gas turbine engine comprising: a fastener having a first end, a second end, and an elongated body extending between the first end and the second end; a second part; a first part disposed between the first end of the fastener and the second part, the first part having an abutment, the abutment located between the first end of the fastener and the second part, the first part having a clamped portion between the abutment and the second part; an adapter having a tubular body disposed around the elongated body of the fastener, the adapter extending between the first end of the fastener and the abutment; and a clamping force path extending between the first end of the fastener and the second part, the clamping force path extending via the adapter and via the abutment.

In an embodiment of the above, the fastener extends across a portion of the first part, through a bore formed across the portion of the first part.

In another embodiment according to any of the previous embodiments, an end of the adapter opposite the abutment protrudes from the bore and forms a clearance between the first end of the fastener and the portion of the first part.

In another embodiment according to any of the previous embodiments, the abutment is provided in the form of an annular shoulder formed at an intermediary location along a length of the bore.

In another embodiment according to any of the previous embodiments, the annular shoulder extends obliquely relative a length of the bore, and wherein an end of the adapter engaging the annular shoulder extends matingly obliquely relative the length of the bore.

In another embodiment according to any of the previous embodiments, the adapter is made of a material having a same coefficient of thermal expansion than a material forming the body of the fastener.

In another embodiment according to any of the previous embodiments, the adapter has an adapter length extending between the first end of the fastener and the abutment, and the first part has a clamped length extending between the abutment and the second part, the adapter length being at least 2 times greater than the clamped length of the first part.

In another embodiment according to any of the previous embodiments, the fastener has a head at the first end, the head engaged with an end of the adapter opposite the abutment.

In another embodiment according to any of the previous embodiments, the fastener has a threaded portion at the second end, the threaded portion being threadingly engaged with a mating female thread formed in the second part.

According to another aspect of the present invention, there is provided a method of use of an assembly in a gas turbine engine, the method comprising : at the assembly, a fastener clamping a first part between a second part and a first end of the fastener, via an adapter extending between the first end of the fastener and an abutment of the first part; and increasing the temperature of the assembly, said increasing the temperature of the assembly including a first portion of the fastener extending alongside the adapter being subjected to a same thermal growth as the adapter, and a second portion of the fastener extending between the abutment and the second part to a different thermal growth than a portion of the first part extending between the abutment and the second part.

In yet a further aspect, there is provided an assembly comprising : a first part of the assembly; a second part of the assembly; a fastener having a first end engaged with the first part, a second end engaged with the second part, and an elongated body extending between the first end and the second end, the fastener holding the second part against the first part, the first part extending between the first end of the fastener and the second part, the first part having an abutment between the first end of the fastener and the second part; and an adapter having a tubular body disposed around the elongated body of the fastener, the adapter extending between the abutment and the first end of the fastener, the first end of the fastener holding the adapter against the abutment.

Features of the systems, devices and methods described herein may be used in various combinations, in accordance with the embodiments described herein.

### DESCRIPTION OF THE DRAWINGS

Reference is now made to the accompanying figures in which:
Fig. 1 is a schematic cross-sectional view of a gas turbine engine;
Fig. 2 is a cross-sectional view of an assembly, in accordance with one embodiment;
Fig. 3 is a cross-sectional view of an assembly, in accordance with another embodiment;
Fig. 4 is an enlarged view of portion 4-4 of Fig. 3;
Fig. 5 is an enlarged view of portion 5-5 of Fig. 3;
Fig. 6 is a cross-sectional view of an assembly in accordance with another embodiment;
Fig. 7 is a cross-sectional view of an assembly in accordance with another embodiment; and

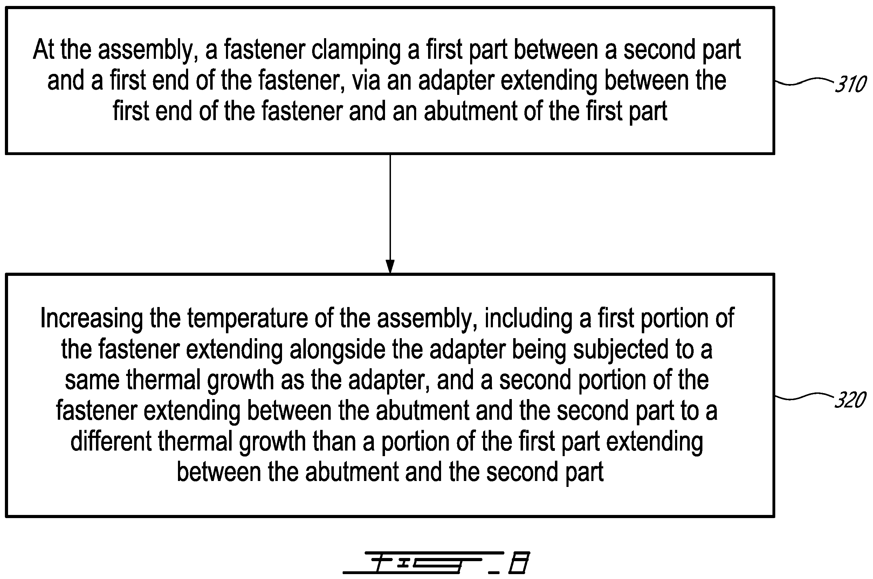

Fig. 8 is a flow chart of a method of use of an assembly in accordance with an embodiment.

### DETAILED DESCRIPTION

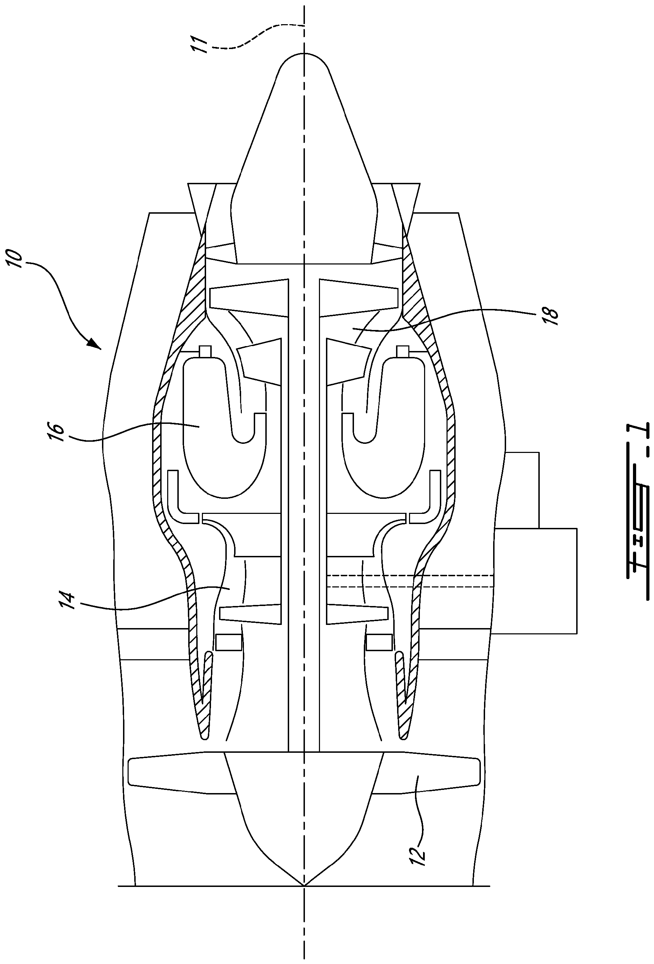

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases. The compressor section 14, combustor 16, turbine 18, and exhaust can be said to form a hot section of the gas turbine engine where components may be substantially exposed to thermal growth during operation.

Gas turbine engines such as the one shown in Fig. 1 include a number of assemblies of different parts. In some assemblies, different parts are held clamped against one another via one or more fasteners.

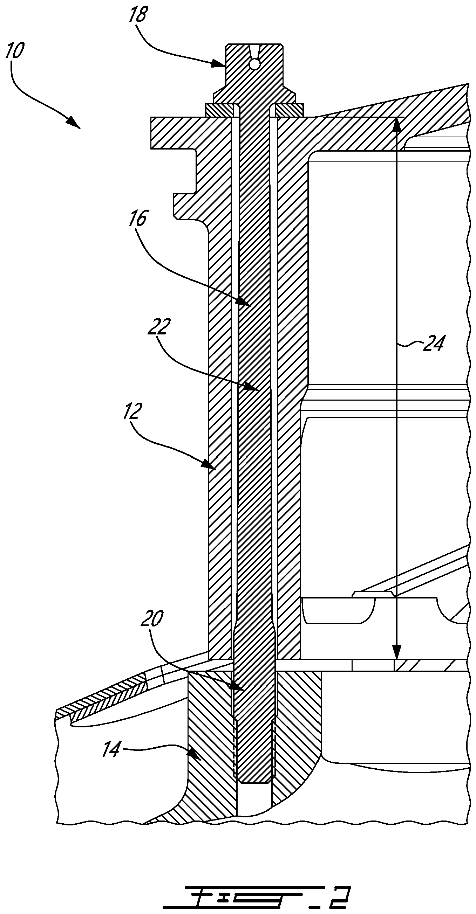

An example of an assembly 10 having different parts 12, 14 held clamped against one another via a fastener 16 is presented in Fig. 2. In this example, two parts, which will arbitrarily be labeled a first part 12 and a second part 14 for convenience, are clamped to one another by a fastener 16. A first end 18 of the fastener 16 is engaged with the first part 12, and a second end 20 of the fastener 16 is engaged with the second part 14. In this embodiment, the fastener 16 is engaged in a manner to apply a compression force, commonly referred to as a preload, between the first part 12 and the second part 14. The compression force is applied in a portion of the first part, between the first end 18 of the fastener 16 and the second part 14, in reaction to elastic tension in the tensioned length of the elongated body 22 of the fastener. The compression force can be said to clamp the first part 12 between the second part 14 and a first end 18 of the fastener 16. Accordingly, a clamping force path can be defined as a sequence of regions of the assembly, including a portion of the first part 12 which can be referred to herein as the clamped portion, within which a certain amount of compressive stress resulting from the clamping is located. The length of the first part which is subjected to the compression force will be referred to as the clamped length 24 herein.

It will be noted in the embodiment presented in Fig. 2, the clamped length 24 is significant, many times the diameter of the fastener 16. If the assembly 10 is subjected to a significant increase or decrease in temperature, both the fastener 16 and the first part 12 will be subjected to thermal expansion or thermal contraction. In a gas turbine engine 10 for instance, it is common for assemblies to be subjected to a significant increase in temperature during operation of the engine, especially in certain portions of the operating envelope, and to decrease subsequently to the operation. In an embodiment where the fastener 16 and the first part 12 are made of the same material, the thermal expansion or thermal contraction may be the same in the fastener 16 and in the corresponding clamped portion of the first part 12, and the pre-loading of the fastener 16 may not be significantly affected. However, in some cases, the thermal expansion or thermal contraction can be different in the clamped portion of the first part 12 than in the fastener 16. This may be the case when the fastener 16 and the first part 12 are made of different materials, with different coefficients of thermal expansion, due to different design requirements. In such cases, the fastener 16 may become significantly bigger than the clamped portion of the first part 12 in some conditions of use, which may undesirably lead to loosening of the clamping, or the clamped portion of the first part 12 may become bigger than the fastener 16, which may undesirably lead to an increase in the compressive stress in the clamped portion of the first part 12. Such effects may need to be factored into design considerations and may be undesirable.

It was noted that factors influencing the degree of such dimensional mismatch include: difference in rates of thermal expansion (i.e. differences in coefficient of thermal expansion), amplitude of temperature change (a greater change in temperature generates a greater growth or contraction, and a greater difference in the dimensions of the materials subjected to the different growth or contraction), and the dimension of the clamped length. Concerning the latter, indeed, the longer the clamped length 24, the greater the length over which the difference in thermal growth or contraction may develop, and a greater clamped length may thus proportionally affect the extent of the difference in dimensions following a given amount of thermal growth or contraction.

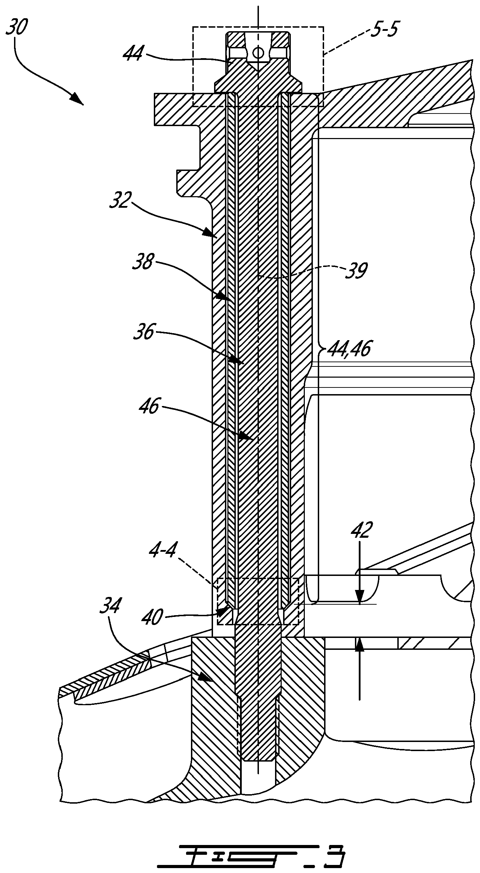

Fig. 3 presents an alternate embodiment of an assembly 30 having different parts 32, 34 held clamped against one another via a fastener 36. In this example, two parts, which will also be referred to here as a first part and a second part for convenience, are clamped to one another by a fastener 36. However, in this embodiment, another component which will be referred to herein as an adapter 38, is used in the clamping force path, between the first end of the fastener 36 and an abutment 40 formed in the first part 32. In this embodiment, only the length of the first part, referred to as the clamped length 42, which extends between the abutment 40 and the second part 34 receives the compression forces from the fastener 36. Accordingly, the portion of the first part which bears the clamping force path (the clamped portion) is significantly shorter in the embodiment of Fig. 3 than in the embodiment of Fig. 2, with the adapter 38 bearing the remaining portion of the clamping force path instead. The length 44 of the first part 32 which coincides with the length 46 of the adapter 38 is not subjected to the compressive forces. The length of the elongated body of the fastener 36 can be said to extend along an axis 39. Accordingly, the abutment 40 can be said to be located at an intermediary position along the axis, 39, which is between the first end of the fastener 36 and the second part 34.

The adapter 38 can be made of a material having a coefficient of thermal expansion closer to a coefficient of thermal expansion of the material of the fastener than the coefficient of thermal expansion of the material of the first part which surrounds the adapter may be to the coefficient of thermal expansion of the material of the fastener. In other words, if we refer to the coefficient of thermal expansion of the material of the first part as the first coefficient of thermal expansion, the one of the fastener as the second coefficient of thermal expansion, and the one of the adapter as the third coefficient of thermal expansion, the difference between the first and second coefficients of thermal expansion may be greater than the difference between the second and third coefficients of thermal expansion. More specifically, in some embodiments, the coefficient of thermal expansion of the material of the adapter 38 may be close to or equal to the thermal expansion coefficient of the material of the fastener 36. For instance, the coefficient of thermal expansion of the adapter 38 can be of between 0.9 and 1.1 times the coefficient of thermal expansion of the fastener 36, preferably between 0.95 and 1.05, more preferably between 0.99 and 1.01. In one example, the adapter 38 can be made of the same material as the fastener 36 and have the same thermal expansion coefficient. Accordingly, in the event of thermal growth or thermal contraction, the portion of the length of the fastener 36 which is associated to the length of the adapter 38 may grow or contract at roughly the same rate as the length of the fastener 36, and lead to no significant effect on the compressive forces extending along the clamping force path. Only the clamped length 42 of the fastener which extends between the abutment 40 of the adapter 38 and the second part 34 will be subjected to the difference in thermal expansion or contraction with the clamped portion of the first part 32, and contribute to a change on the compressive forces based on the change in temperature. However, since the clamped length here is but a fraction of the one of the embodiment shown in Fig. 2, due to the presence of the adapter 38, the effect on change in the compressive forces can be correspondingly and significantly reduced.

It will be noted that the longer the length 46 of the adapter 38 compared to the clamped length 42 of the first part 32, the greater the effect on the mitigation of the difference in thermal expansion or contraction. The adapter 38 can be said to have an adapter length 46 extending between the first end 44 of the fastener 36 and the abutment 40, and the first part 32 can be said to have a clamped length 42 extending between the abutment 40 and the second part 34. To this end, the adapter length 46 can be at least 2 times greater than the clamped length 42 of the first part 32, preferably at least 3, preferably at least 5, for instance.

The fastener 36 can be said to axially clamp the first part between the first end of the fastener and the second part 34, via the adapter 38. More specifically, the adapter 38 can be said to be axially clamped by the fastener 36 between the abutment 40 and the first end of the fastener 36.

It will be noted that in this embodiment, the fastener 36, and the adapter 38, extend inside a bore formed through the first part 32. The first end of the adapter is adjacent a first end of the bore, and the second part 34 is adjacent the second end of the bore. The abutment 40 can be embodied as a shoulder provided at an intermediary location between the first end and the second end of the bore. At this stage, it can be helpful to introduce the notion of an axis extending along the length of the fastener (and of the bore). The bore can be said to have two different portions, with corresponding, different, diameters. The second portion of the bore extending from the second end to the abutment 40 can be narrower than a first portion of the bore extending from the abutment 40 to the first end. Indeed, the first portion can be broader to accommodate the adapter 38 in addition to the body 46 of the fastener 36. The elongated body 46 of the fastener 36 can be generally cylindrical, and the adapter 38 can be tubular around the elongated body 46 of the fastener 36. Accordingly, the adapter 38 can be said to have an elongated body. In this embodiment, the adapter 38 is more specifically in the form of an elongated annulus disposed around the body, generally forming a cylindrical sleeve. The internal diameter of the cylindrical sleeve can be slightly bigger than the external diameter of the body 46 of the fastener 36. Similarly, the internal diameter of the first portion of the bore can be slightly bigger than the external diameter of the cylindrical sleeve, and the internal diameter of the second portion of the bore can be slightly bigger than the external diameter of the body of the fastener 36.

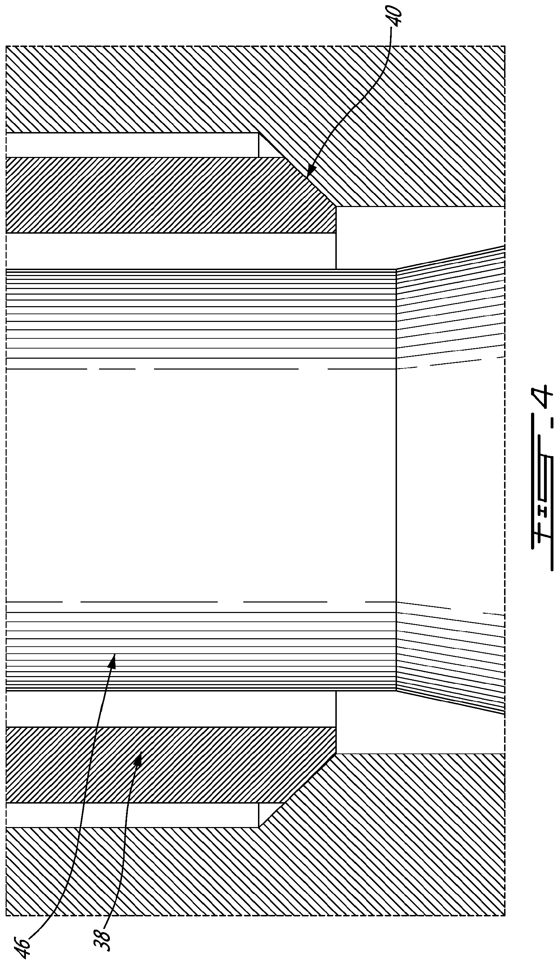

In some embodiments, the abutment 40 can be provided in the form of an annular shoulder between the different diameters of the two different portions of the bore. In some embodiments, the annular shoulder may be formed in a plane transversal to the axis, and the corresponding end of the adapter can be planar, in a corresponding transversal plane. However, in the illustrated embodiment, and as better seen on Fig. 4, it was preferred to use a sloping interface between the end of the adapter 38 and the abutment 40. More specifically, the end of the adapter 38 and the abutment 40 have a correspondingly sloping surface, provided at roughly 45 degrees in this example. In other words, the end of the adapter 38 can extend obliquely (relative the axis and relative a plane transverse to the axis) in a mating manner with the shoulder, i.e. at a same angle in a manner to form a good engagement. This can be useful, in some embodiments, to provide a self-centering feature to the adapter 38 and abutment 40, and/or to spread the forces over a larger surface area and/or otherwise help further reduce stresses in the parts 32, 34.

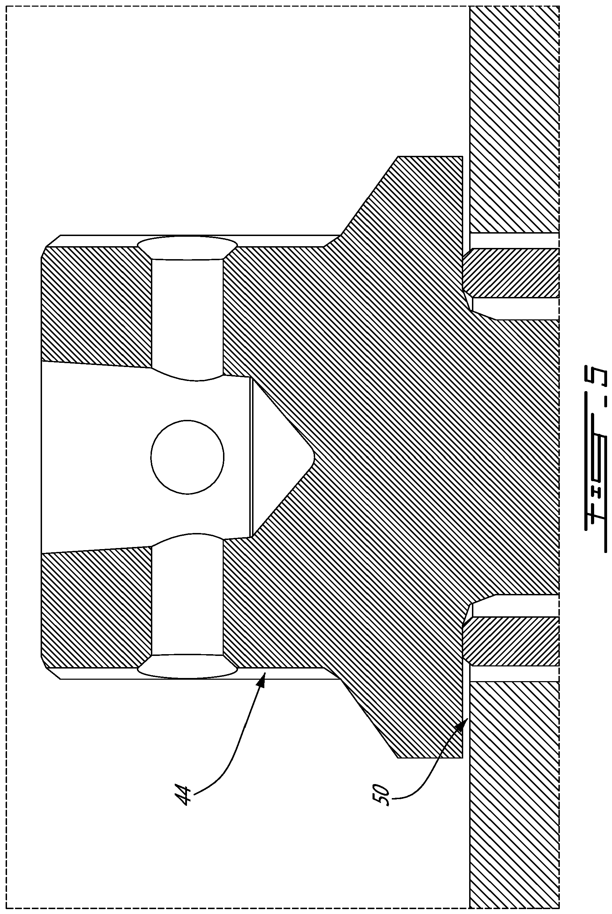

Referring back to Fig. 3, and to the enlarged view of Fig. 5, the first end 44 of the fastener 36 is engaged with the opposite end of the adapter 38. This engagement can be direct, as shown, or indirect, such as via a washer or other intervening component depending of the embodiment. In this embodiment, it will be noted that when abuttingly engaged against the abutment 40, the other end of the adapter 38 protrudes from the first end of the bore as shown, forming an axial clearance 50 between the first end of the fastener 36 and the surrounding surface of the first part 32. The assembly 30 can be designed for this axial clearance 50 to remain, and to avoid contact between the first end of the fastener 36 and the surrounding surface of the first part, at all anticipated thermal conditions.

Referring back to Fig. 3 in this embodiment, the first end 44 of the fastener 36 which is engaged with the opposite end of the adapter 38 is in the form of a head of the fastener. This engagement can be direct as shown, or indirect (e.g. via a washer or the like) depending on the embodiment. The second end of the fastener 36 is engaged with the second part 34. In this example, more specifically, the body of the fastener 36 has a male threaded portion which is directly threadingly engaged with a corresponding female threaded portion provided in a bore of the second part 34. It will be noted that different embodiments are possible.

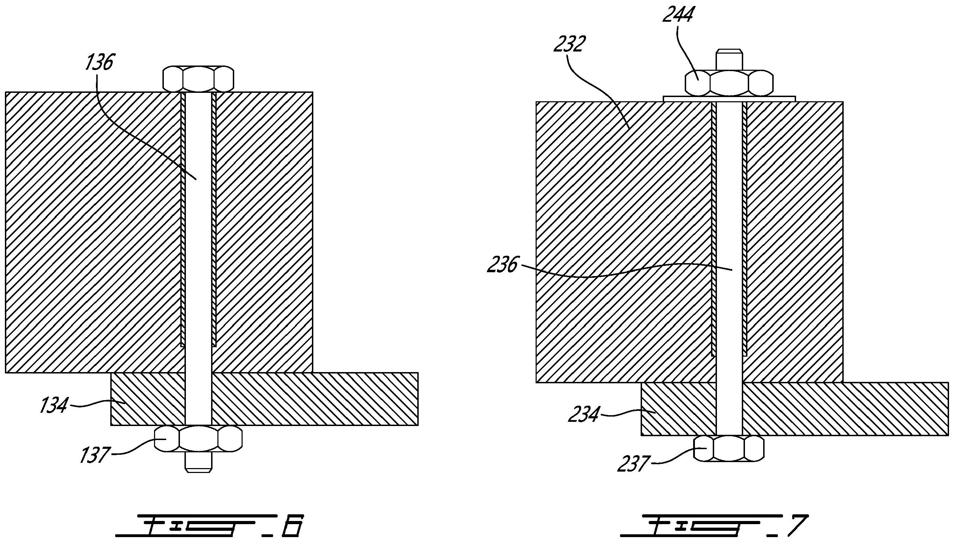

For instance, referring to Fig. 6, in another embodiment, the second end 137 of the fastener 136 can be engaged with a flat surface of the second part 134 via a nut either directly as shown, or indirectly (e.g. via a washer) directly engaged with a corresponding surface of the second part 134 for instance. Referring to Fig. 7, in yet another embodiment, the first end 244 of the fastener 236 can have a nut secured to a threaded stem of the fastener 236 and forming the engagement with a surrounding flat portion of the first part 232, either directly or indirectly (e.g. via a washer as shown), and the second end 237 of the fastener can have a head engaged with a surrounding surface of the second part 234. Many other embodiments are possible.

Accordingly, and perhaps more generally, during use, at the assembly, a fastener clamps 310 a first part between a second part and a first end of the fastener, via an adapter extending between the first end of the fastener and an abutment of the first part; and when the temperature of the assembly is increased 320, the increasing the temperature of the assembly including a first portion of the fastener extending alongside the adapter being subjected to a same thermal growth as the adapter, and a second portion of the fastener extending between the abutment and the second part to a different thermal growth than a portion of the first part extending between the abutment and the second part.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, while embodiments of an assembly having two parts and one fastener were used as relatively simple examples in the description above, it will be understood that in alternate embodiments, more complex assemblies are possible, such as assemblies having more than two parts and/or more than one fastener (and adapter). Moreover, while the examples presented above show parts of a gas turbine engine, it will be understood that the technology described herein may find uses in other applications, such as automotive applications or mechanical assemblies associated to yet other types of machinery. Portions of a thermal engine which are in proximity with the combustion chamber and/or with exhaust components may be referred to as being in a hot section. Yet further modifications could be implemented by a person of ordinary skill in the art in view of the present disclosure, which modifications would be within the scope of the present technology.

## Claims

1. An assembly (10; 30) for a hot section of an engine (10), the assembly (10; 30) comprising:
a first part (12; 32; 232) having a first coefficient of thermal expansion;
a second part (14; 34; 134; 234);
a fastener (16; 36; 136; 236) having a second coefficient of thermal expansion, a first end (18; 44; 244), a second end (20; 137; 237) engaged with the second part (14; 34; 134; 234), and an elongated body (22; 46) extending along an axis (39) between the first end (18; 44; 244) and the second end (20; 137; 237), the fastener (16; 36; 136; 236) axially clamping the first part (12; 32; 232) between the first end (18; 44; 244) and the second part (14; 34; 134; 234), the first part (12; 32; 232) having an abutment (40) at an axial location between the first end (18; 44; 244) of the fastener (16; 36; 136; 236) and the second part (14; 34; 134; 234); and
an adapter (38) having a tubular body disposed around the elongated body (22; 46) of the fastener (16; 36; 136; 236), the adapter (38) having a third coefficient of thermal expansion, the adapter (38) axially clamped by the fastener (16; 36; 136; 236) between the abutment (40) and the first end (18; 44; 244) of the fastener (16; 36; 136; 236), a difference between the third coefficient of thermal expansion and the second coefficient of thermal expansion being smaller than a difference between the first coefficient of thermal expansion and the second coefficient of thermal expansion.

2. The assembly (10; 30) of claim 1, wherein the fastener (16; 36; 136; 236) extends across a portion of the first part (12; 32; 232), through a bore formed across the portion of the first part (12; 32; 232).

3. The assembly (30) of claim 2, wherein an end of the adapter (38) opposite the abutment (40) protrudes from the bore and forms a clearance (50) between the first end (44) of the fastener (36) and the portion of the first part (32).

4. The assembly (10; 30) of claim 2 or 3, wherein the abutment (40) is provided in the form of an annular shoulder formed at an intermediary location along a length of the bore extending along the axis (39).

5. The assembly (10; 30) of claim 4, wherein the annular shoulder extends obliquely relative the axis (39), and wherein an end of the adapter (38) engaging the annular shoulder extends matingly obliquely relative the length of the bore.

6. The assembly (10; 30) of any preceding claim, wherein the third coefficient of thermal expansion is the same as the second coefficient of thermal expansion.

7. The assembly (10; 30) of any preceding claim, wherein the adapter (38) has an adapter length (46) extending between the first end (44) of the fastener (36) and the abutment (40), along the axis (39), and the first part (12; 32) has a clamped length (24; 42) extending between the abutment (40) and the second part (14; 34) along the axis (39), the adapter length (46) being at least 2 times greater than the clamped length (24; 42) of the first part (12; 32).

8. The assembly (10; 30) of any preceding claim, wherein the fastener (36) has a head at the first end (44), the head engaged with an end of the adapter (38) opposite the abutment (40) relative the axis (39).

9. The assembly (10; 30) of any preceding claim, wherein the fastener (36) has a threaded portion at the second end (137), the threaded portion being threadingly engaged with a mating female thread formed in the second part (34).

10. The assembly (10; 30) of any preceding claim, wherein the fastener (136) has a nut secured at the second end (137), the nut being engaged with a surface of the second part (134).

11. A gas turbine engine (10) comprising:
a fastener (16; 36; 136; 236) having a first end (18; 44; 244), a second end (20; 137; 237), and an elongated body (22; 46) extending between the first end (18; 44; 244) and the second end (20; 137; 237);
a second part (14; 34; 134; 234);
a first part (12; 32; 232) disposed between the first end (18; 44; 244) of the fastener (16; 36; 136; 236) and the second part (14; 34; 134; 234), the first part (12; 32; 232) having an abutment (40), the abutment (40) located between the first end (18; 44; 244) of the fastener (16; 36; 136; 236) and the second part (14; 34; 134; 234), the first part (12; 32; 232) having a clamped portion between the abutment (40) and the second part (14; 34; 134; 234);
an adapter (38) having a tubular body disposed around the elongated body (22; 46) of the fastener (16; 36; 136; 236), the adapter (38) extending between the first end (18; 44; 244) of the fastener (16; 36; 136; 236) and the abutment (40); and
a clamping force path extending between the first end (18; 44) of the fastener (16; 36) and the second part (14; 34), the clamping force path extending via the adapter (38) and via the abutment (40).

12. The gas turbine engine (10) of claim 11, wherein the fastener (16; 36; 136; 236) extends across a portion of the first part (12; 32; 232), through a bore formed across the portion of the first part (12; 32; 232).

13. The gas turbine engine (10) of claim 12, wherein an end of the adapter (38) opposite the abutment (40) protrudes from the bore and forms a clearance (50) between the first end (44) of the fastener (36) and the portion of the first part (32).

14. The gas turbine engine (10) of claim 12 or 13, wherein the abutment (40) is provided in the form of an annular shoulder formed at an intermediary location along a length of the bore.

15. A method of use of an assembly (10; 30) in a gas turbine engine (10), the method comprising:
at the assembly (10; 30), a fastener (16; 36; 136; 236) clamping a first part (12; 32; 232) between a second part (14; 34; 134; 234) and a first end (18; 44; 244) of the fastener (16; 36; 136; 236), via an adapter (38) extending between the first end (18; 44; 244) of the fastener (16; 36; 136; 236) and an abutment (40) of the first part (12; 32; 232); and
increasing the temperature of the assembly (10; 30), said increasing the temperature of the assembly (10; 30) including a first portion of the fastener (16; 36; 136; 236) extending alongside the adapter (38) being subjected to a same thermal growth as the adapter (38), and a second portion of the fastener (16; 36; 136; 236) extending between the abutment (40) and the second part (14; 34; 134; 234) to a different thermal growth than a portion of the first part (12; 32; 232) extending between the abutment (40) and the second part (14; 34; 134; 234).
